# EUROPEAN PATENT APPLICATION

(11) **EP 4 455 752 A2**
(43) Date of publication of application: **30.10.2024**
(21) Application number: 24170447.7
(22) Date of filing: 16.04.2024
(51) Int. Cl.: G02B 6/44

(54) **DEVICES, SYSTEMS, AND METHODS FOR SECURING CABLES**

(30) Priority: 20.04.2023 US 202363460657 P
(71) Applicant: Corning Research & Development Corporation, Corning, New York 14831 (US)
(72) Inventor: BUFF, Scott Eaker, Hickory, 28602 (US); FAULKNER, Michael Todd, Granite Falls, 28630 (US); NIELSEN, Lars Kristian, Denver, 28037 (US)
(74) Representative: Reddie & Grose LLP

(57) **Abstract**

A device for securing one or more cables within an enclosure is provided. The device includes a first portion configured to receive cable(s) therein and a second portion that is movable between an open position and a closed position with respect to the first portion. The device also includes a support positioned within the first portion or the second portion, and the device is configured to rest against the cable(s) when the second portion is moved into the closed position. The support enables differently sized cables to be secured between the first portion and the second portion when the second portion is in the closed position.

## Description

### PRIORITY APPLICATION

This application claims the benefit of priority of U.S. Provisional Application No. 63/460,657, filed on April 20, 2023, the content of which is relied upon and incorporated herein by reference in its entirety.

### FIELD OF THE DISCLOSURE

Embodiments of the present disclosure relate generally to network communications equipment and, more particularly, to devices and systems for securing cables, such as within communications equipment cabinets and other enclosures.

### BACKGROUND OF THE DISCLOSURE

Cables (such as those used to carry communication fiber) are often routed in and out of communications equipment cabinets and other enclosures in order to connect with various communications equipment. The cables are often routed into various structures within the enclosures in a manner that maintains a certain organization and/or stability. Current devices for securing cables within such enclosures are designed for specific cable diameters and are difficult to adjust after installation.

Improvements in the foregoing are desired.

### BRIEF SUMMARY OF THE DISCLOSURE

Embodiments of the present disclosure provide for various assemblies and systems that cure many of the above noted defects and difficulties. In this regard, various embodiments of the present disclosure provide devices for securing one or more cables (e.g., in individual cable form and/or in ribbon form) within an enclosure in a way that allows for variable cable amounts and/or sizes (e.g., cables of different diameters may be secured therein). Further, in some embodiments, the devices described herein are configured for repeated opening and closing, thereby allowing for easy modification of the configuration of secured cable(s) (e.g., changing the cables, adjusting their position, etc.), such as after installation/mounting of the device.

As noted herein, current devices for securing cables within an enclosure, such as onto a fiber management tray within an enclosure, are preset to accept a specific quantity of cables with specific diameter(s). This reduces functional optionality for changing the cable(s) secured within the device. Further, many current devices, once opened, are not able to return to a closed position. This is problematic because the device must be replaced after being opened because of its inability to be re-closed.

The devices disclosed herein are able to receive and secure one or more cables of varying quantities and diameters and are further able to be re-closed after being opened while mounted on a structure (e.g., a fiber management tray). For example, example devices disclosed herein have a first portion and a second portion, and the second portion is removably latched with the first portion in a way that enables differently sized cables to be secured between the first portion and the second portion when the second portion is in a closed position. The first portion and the second portion are connected in various ways, such as by at least one of a living hinge, a system of pluralities of ridges, a peg and hole mechanism, or a tie wrap system, among other connection mechanisms. Further, many of the devices disclosed herein include a support within one or both of the first portion or second portion that enables, or at least helps enable, the device to be able to secure differently sized cables therewithin. For example, some devices have supports connected by at least one spring and/or riser, and some other devices additionally or alternatively have supports with foam-like material disposed within one or both of the first portion and the second portion.

In an example embodiment, a device for securing one or more cables is provided. The device includes a first portion configured to receive one or more cables therein, a second portion that is movable between an open position and a closed position with respect to the first portion, and a support positioned within the first portion or the second portion and configured to rest against the one or more cables when the second portion is moved into the closed position. The support enables differently sized cables to be secured between the first portion and the second portion when the second portion is in the closed position.

In some embodiments, the second portion may be configured to removably latch with the first portion.

In some embodiments, a second edge of the second portion may be configured to removably latch with a first edge of the first portion as a result of a force exerted by a user while the second portion is moved into the closed position.

In some embodiments, one or more second ridges of the second portion may be configured to removably latch with a first plurality of ridges of the first portion in one of multiple positions so as to enable different sized channels for securing the one or more cables therein.

In some embodiments, one or more pegs extending from the second portion may be configured to removably latch with one or more holes disposed in the first portion.

In some embodiments, the second portion may be configured to removably latch with the first portion using one or more tie wraps.

In some embodiments, the first portion and the second portion may be rigidly connected by a side wall.

In some embodiments, the second portion may be configured to re-latch with the first portion after the second portion has moved from the closed position to the open position.

In some embodiments, the first portion may be connected to the second portion by a hinge.

In some embodiments, the hinge may be a living hinge.

In some embodiments, the first portion and the second portion may be separable.

In some embodiments, the second portion of the device may include a thumb portion extending from a first side of the second portion such that the second portion is accessible for a user to move the second portion from the closed position to the open position.

In some embodiments, the first portion may include a thumb cutout on a first side of the first portion that is vertically below the thumb portion of the second portion when the second portion is in the closed position such that a thumb can access the thumb portion of the second portion.

In some embodiments, the support may include at least one spring.

In some embodiments, the support may include at least one riser, and the at least one spring and the at least one riser may be configured such that a first surface of the first portion is parallel to a second surface of the support.

In some embodiments, a second surface of the support may be slanted or curved with respect to a first surface of the first portion.

In some embodiments, the support may include a foam-like material.

In some embodiments, the device may further include an attachment clip disposed on a bottom side of the first portion such that the device is mountable to a fiber management tray.

In another example embodiment, an enclosure is provided. The enclosure includes a device mounted within the enclosure, and the device includes a first portion, a second portion that is movable between an open position and a closed position with respect to the first portion, and a support positioned within the first portion or the second portion. The support enables differently sized cables to be secured between the first portion and the second portion when the second portion is in the closed position. The enclosure also includes one or more cables disposed within the device such that the one or more cables are secured in a desired position within the enclosure when the second portion of the device is in the closed position.

In some embodiments, the enclosure may further include a fiber management tray, and the device may further include an attachment clip disposed on a bottom side of the first portion such that the device is mountable to the fiber management tray.

In some embodiments, the second portion of the device may include a thumb portion extending from a first side of the second portion such that the second portion is accessible for a user to move the second portion from the closed position to the open position.

In some embodiments, the first portion may include a thumb cutout on a first side of the first portion that is vertically below the thumb portion of the second portion when the second portion is in the closed position such that a thumb can access the thumb portion of the second portion.

In another example embodiment, an enclosure is provided. The enclosure includes a fiber management tray disposed within the enclosure. The fiber management tray is configured to organize one or more cables within the enclosure, and the fiber management tray includes a first side, a second side, and a fiber management section therebetween. One or more feeder cables extend into the fiber management tray along the first side. The enclosure also includes a device mounted to the fiber management tray adjacent the first side of the fiber management tray. The device is configured to retain the one or more feeder cables. The device includes a first portion configured to receive the one or more feeder cables therein. The first portion defines a first side and a second side, and the second side is opposite the first side. The device also includes a second portion that is movable between an open position and a closed position with respect to the first portion, and the second portion includes a thumb portion that extends beyond the second side of the first portion when the second portion is in the closed position. A longitudinal axis of the device extends parallel to the first side of the fiber management tray with the first side of the first portion being closer to the first side of the fiber management tray than the second side of the first portion such that the thumb portion of the second portion is accessible by a user. The one or more feeder cables are disposable within the device such that the one or more feeder cables are secured in a desired position within the enclosure when the second portion of the device is in the closed position.

### BRIEF DESCRIPTION OF THE DRAWINGS

Having thus described embodiments of the present disclosure in general terms, reference will now be made to the accompanying drawings, which are not necessarily drawn to scale, and wherein:
FIG. 1 illustrates a perspective view of an example distribution cabinet containing a plurality of fiber management trays, in accordance with some embodiments discussed herein;
FIG. 2 illustrates an example fiber management tray, shown in a top view and a side view, in accordance with some embodiments discussed herein;
FIG. 3 illustrates a perspective view of an example device for securing one or more cables, in accordance with some embodiments discussed herein;
FIG. 4 illustrates a front perspective view of the example device of FIG. 3, in accordance with some embodiments discussed herein;
FIG. 5A illustrates a front perspective view of an example device for securing one or more cables with two cables secured therewithin, in accordance with some embodiments discussed herein;
FIG. 5B illustrates another front perspective view of the example device for securing one or more cables of FIG. 5A with one cable secured therewithin, in accordance with some embodiments discussed herein;
FIG. 6 illustrates a top view of an example device for securing one or more cables that is installed on a tray and has one cable secured therewithin, in accordance with some embodiments discussed herein;
FIG. 7 illustrates a perspective view of an example device installed in a splice tray, in accordance with some embodiments discussed herein;
FIG. 8 illustrates a perspective view of another example device installed in a fiber transition housing, in accordance with some embodiments discussed herein;
FIG. 9A illustrates a perspective view of an example device for securing one or more cables, the device having a second portion that is in an open position, and the device having a first plurality of ridges and a second plurality of ridges on both sides, in accordance with some embodiments discussed herein;
FIG. 9B illustrates a perspective view of the example device for securing one or more cables of FIG. 9A, the second portion being in a closed position, in accordance with some embodiments discussed herein;
FIG. 9C illustrates a perspective view of the example device for securing one or more cables of FIGs. 9A-9B, the second portion being in a closed position, and two cables being secured within, in accordance with some embodiments discussed herein;
FIG. 10 illustrates a perspective view of another example device for securing one or more cables, the device having a second portion that is in an open position, and the device having a first plurality of ridges and a second plurality of ridges on one side and a living hinge on the other side, in accordance with some embodiments discussed herein;
FIG. 11A illustrates a perspective view of another example device for securing one or more cables, the device having holes configured to receive one or more tie wraps, in accordance with some embodiments discussed herein;
FIG. 11B illustrates a perspective view of the example device for securing one or more cables of FIG. 11A, the device having one or more tie wraps threaded through the holes, in accordance with some embodiments discussed herein;
FIG. 12A illustrates a perspective view of another example device for securing one or more cables, a first portion of the device having holes configured to receive pegs of a second portion of the device, in accordance with some embodiments discussed herein;
FIG. 12B illustrates a perspective view of the example device for securing one or more cables of FIG. 12A, the pegs being received by the holes, in accordance with some embodiments discussed herein;
FIG. 13 illustrates a perspective view of another example device for securing one or more cables, a support of the device being supported by one or more springs and/or risers on a first portion of the device, and a surface of the support being parallel to a surface of the first portion of the device, in accordance with some embodiments discussed herein;
FIG. 14 illustrates a perspective view of another example device for securing one or more cables, a support of the device being supported by one or more springs and/or risers on a first portion of the device, and a surface of the support being slanted with respect to a surface of the first portion of the device, in accordance with some embodiments discussed herein;
FIG. 15 illustrates a perspective view of another example device for securing one or more cables, a support of the device being supported by one or more springs and/or risers on a first portion of the device, and a surface of the support being curved with respect to a surface of the first portion of the device, in accordance with some embodiments discussed herein;
FIG. 16 illustrates a perspective view of another example device for securing one or more cables, a support of the device being supported by one or more springs and/or risers on a first portion of the device, and a surface of the support being slanted with respect to a surface of the first portion of the device, in accordance with some embodiments discussed herein;
FIG. 17A illustrates a perspective view of another example device for securing one or more cables, a support of the device being supported by one or more springs and/or risers on a second portion of the device, and a surface of the support being slanted with respect to a surface of the second portion of the device, in accordance with some embodiments discussed herein;
FIG. 17B is a zoomed-in front view of the support of FIG. 17A, in accordance with some embodiments discussed herein; and
FIG. 18 illustrates a flowchart for an example method of manufacturing a device for securing one or more cables, in accordance with some embodiments discussed herein.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (*e.g*., network access point (NAP) enclosures, optical network terminals (ONTs), network interface devices (NIDs)). Accordingly, corresponding fiber optic cables may be managed (e.g., routed through, split, reconfigured, connected, etc.) in many different communications equipment cabinets and other enclosures.

Devices and enclosures according to the present disclosure allow maintenance personnel to organize and secure cables in an improved manner, such as leading into and/or within such enclosures, as discussed herein. In this regard, various example devices described herein may be able to secure one or more cables of different diameters onto, e.g., a fiber management tray within an enclosure. In some embodiments, example devices may be configured to removably latch such that one or more cables can be adjusted or changed, by maintenance personnel, an installer, secondary operator/installer, etc. for example.

Various described systems and assemblies provide for improved compliance by maintenance personnel (including, notably, novice maintenance personnel) by offering a simple method of organizing and connecting different quantities and/or types of cables within the communications equipment cabinets or other enclosures. This can prevent or limit signal loss as well as protect the integrity of the entire network.

While some of the illustrated and described embodiments focus on use of various embodiments in fiber management trays within enclosures, any type of enclosure or tray is contemplated for use with various embodiments. For example, the disclosed devices may be usefully employed in many different fiber optic management scenarios, such as in fiber distribution hub cabinets, multi-dwelling unit cabinets, front-end and/or back-end cabinets, closures, or other terminals. In some embodiments, various concepts and designs may be easily adjusted for any communications equipment, such as for use within racks, among other communications equipment.

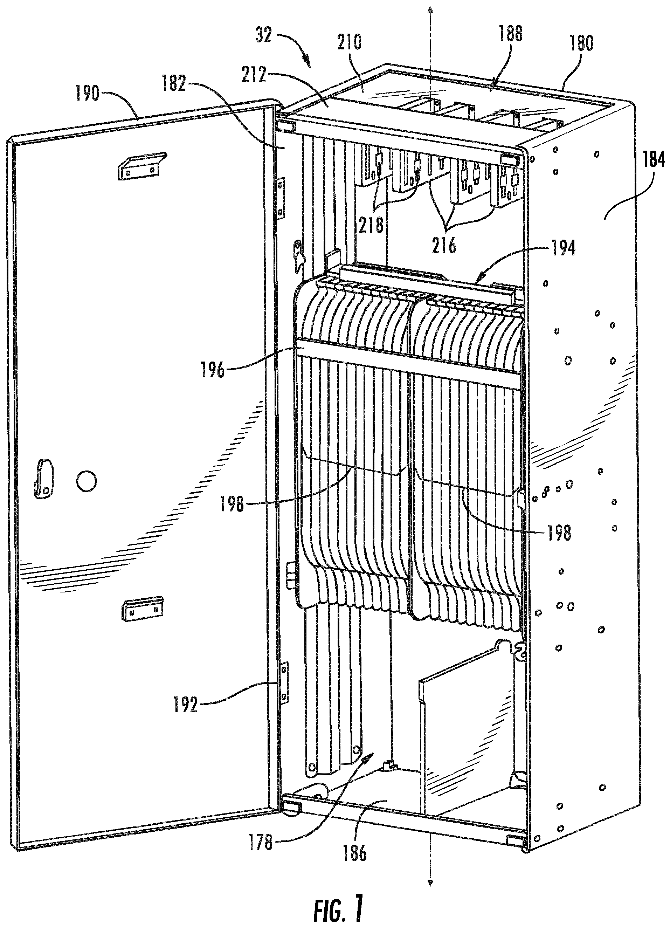

FIG. 1 illustrates an example distribution cabinet 32, which may be installed within a communications architecture (e.g., building network). The distribution cabinet 32 includes various walls that are assembled together to define an interior volume 178. In the illustrated embodiment, the distribution cabinet 32 includes a rear wall 180, a first side wall 182 and a second side wall 184 coupled to opposite sides of the rear wall 180, and a lower wall 186 and an upper wall 188 respectively coupled to a top and bottom of each of the rear wall 180, the first side wall 182, and the second side wall 184. A front door 190 is pivotally coupled to the first side wall 182 (e.g., by hinges 192) to provide selective access to the interior volume 178. The distribution cabinet 32 also includes a tray assembly 194 within the interior volume 178 that comprises a tray housing 196 (or "carriage 196") pivotally coupled to the distribution cabinet 32 and a plurality of fiber management trays 198 coupled to the tray housing 196. The tray housing 196 may pivot/rotate (or otherwise transition) outward from the interior volume 178 to facilitate access to the plurality of fiber management trays 198. The plurality of fiber management trays 198 themselves may each pivot or otherwise move relative to the tray housing 196 (including being removable from the tray housing 196) to provide additional access to any given fiber management tray of the plurality of fiber management trays 198.

Although FIG. 1 illustrates a transparent rear plate 210 without openings as a rear portion of the upper wall 188, such a plate may include different sized openings for different types of cables. For example, there may be openings sized to receive larger, high fiber-count pre-terminated trunk cables, and openings sized to receive smaller fiber-count indoor cables. A front plate 212 defining a front portion of the upper wall 188 may also be removable to assist with accessing a pre-terminated trunk cable and other cables as they are routed into the distribution cabinet 32 (e.g., through the openings in the rear plate 210, if present). Additionally, the distribution cabinet 32 may include brackets 216 below the rear plate 210 that serve as mounting locations for the pre-terminated trunk cable and other cables. Apertures 218 or other mounting features may be provided on the brackets 216 for cooperating with complementary mounting features of clips (not shown), which may be integral with the cables or attached to the cables.

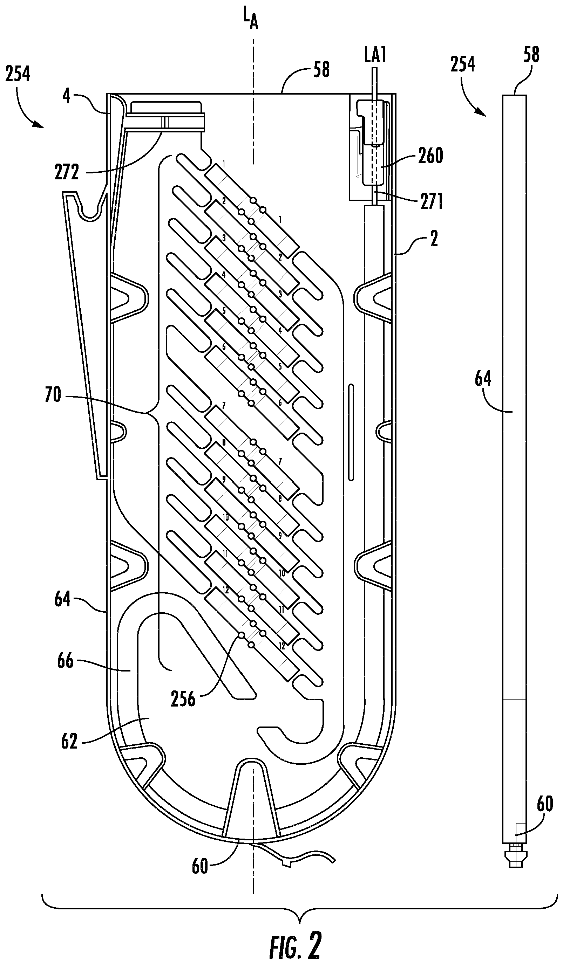

FIG. 2 illustrates a fiber management tray 254 configured to be disposed within, and to organize one or more cables within, an enclosure such as the distribution cabinet 32 of FIG. 1. The fiber management tray 254 includes a device 260 that is configured to secure one or more cables (e.g., cable 271) onto the fiber management tray 254. The one or more cables (e.g., cable 271) feed(s) into a track 66 that guides the one or more cables around the fiber management tray 254 so that the one or more cables can connect to one or more of a plurality of adapter receivers 256 in a fiber management section 70 of the fiber management tray 254. The fiber management tray 254 has one or more peripheral side walls 64 (e.g., first side 2 and second side 4) that extend from a first end 58 to a second end 60, with the fiber management section 70 therebetween. Further, as shown in FIG. 2, the fiber management tray 254 has a longitudinal axis L_{A}.

One or more feeder cables (e.g., cable 271) extend(s) into the fiber management tray 254 along the first side 2, and the device 260 is mounted adjacent to the first side 2 of the fiber management tray 254 to retain the one or more feeder cables. The device 260 is mounted to a base wall 62 of the fiber management tray 254 such that a longitudinal axis LA1 of the device 260 is parallel to the first side 2. Further, the device 260 is strategically oriented with respect to the first side 2 such that it can be easily opened and closed without interference from, e.g., the first side 2. The fiber management tray 254 may also include a routing clip 272 at the first end 58 proximate the second side 4 (or elsewhere on the fiber management tray 254) to assist with routing/organizing the one or more cables.

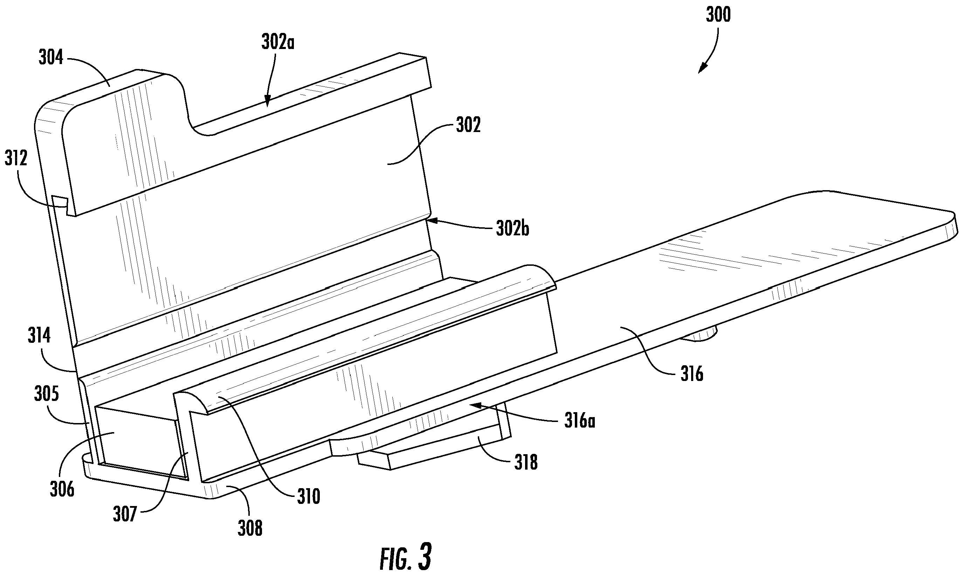

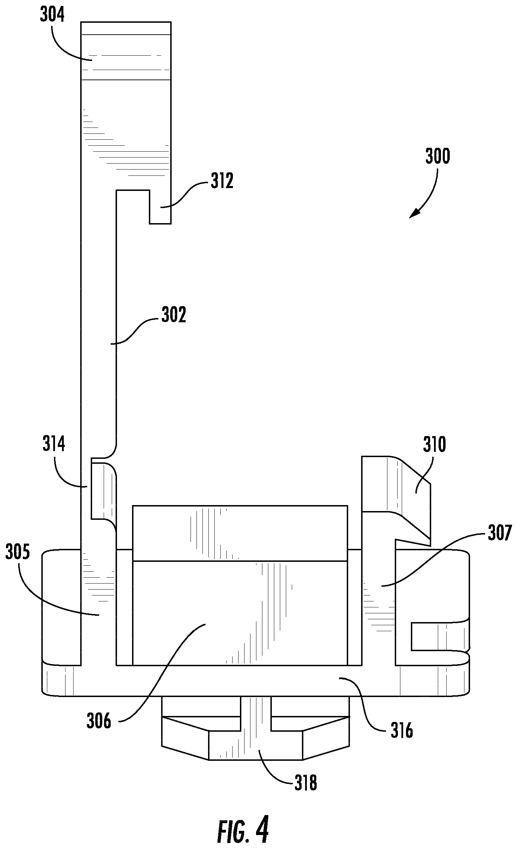

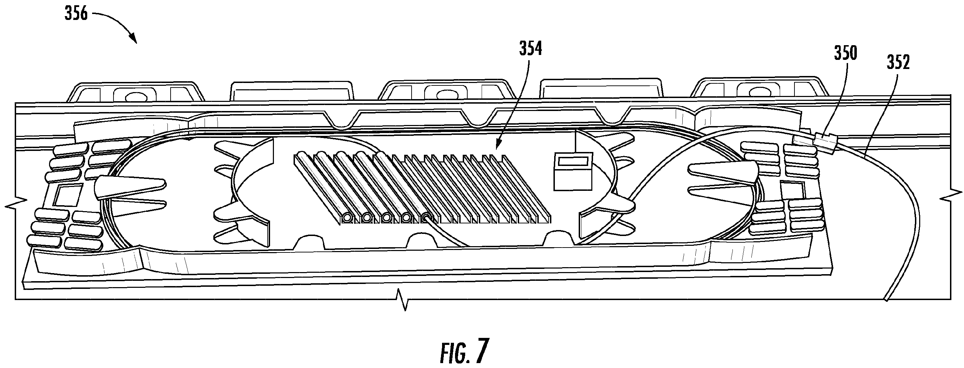

FIGs. 3-4 illustrate an example device 300 for securing one or more cables therein. In some embodiments, the device 300 may be mountable to a fiber management tray within an enclosure where the fiber management tray is configured to organize one or more cables within the enclosure. For example, the device 300 may be mountable to a fiber management tray in the same way that the device 260 is mounted to the fiber management tray 254 in FIG. 2. Alternatively, the device 300 may be mountable to different structures, such as will be exemplified herein with reference to FIGs. 7-8.

The device 300 has a first portion 316 configured to receive one or more cables therein and a second portion 302 that is movable between an open position and a closed position with respect to the first portion 316. In the illustrated embodiment, the first portion 316 includes a first wall 305 and a second wall 307 that extend up from a base 316 of the first portion 316. The second wall 307 comprises a first edge 310 that is configured to receive a second edge 312 of the second portion 302 when the second portion 302 moves from an open position to a closed position as discussed herein. For example, the closed position may be defined by the second edge 312 latching into the first edge 310. Thus, the device 300 may be configured such that one or more cables are disposable within the device 300 and are securable in a desired position within an enclosure when the second portion 302 of the device 300 is in the closed position. The device 300 also includes an attachment clip 318 disposed on a bottom side of the first portion 316 such that the device 300 is mountable to, for example, a fiber management tray (or other communications equipment).

The second portion 302 is configured to removably latch with the first portion 316 as a result of a force exerted by a user while the second portion 302 is moved into the closed position. For example, in the embodiment shown in FIGs. 3-4, the second portion 302 is connected to the first portion 316 by a living hinge 314 such that a first edge 312 of the second portion 302 can removably latch with a first edge 310 of the first portion 316. The living hinge 314, the first edge 310 of the first portion 316, and the first edge 312 of the second portion 302 are configured such that the second portion 302 can be moved back and forth between the open position and the closed position without affecting the ability of the first edge 312 and the first edge 310 to latch together. For example, the second portion 302 may be configured to re-latch with the first portion 316 after the second portion 302 has moved from being latched in the closed position to being unlatched in the open position. As will be discussed herein, the second portion 302 may be connected to the first portion 316 in a variety of different ways (other than by latching the living hinge 314, the first edge 310 of the first portion 316, and the first edge 312 of the second portion 302). For example, in some embodiments, the second portion 302 may be separable from the first portion 316.

The device 300 may also include a support 306 positioned within the first portion 316 and configured to rest against one or more cables when the second portion 302 is moved into the closed position. The support 306 enables differently sized cables to be secured between the first portion 316 and the second portion 302 when the second portion 302 is in the closed position. In some embodiments, the support 306 may be a support cushion. In this regard, in some embodiments, the support 306 may be a made of a foam-like material, or any other material that provides the support necessary to secure one or more cables within the device 300.

Although the support 306 is positioned within the first portion 316 in the embodiment shown in FIG. 3, in some other embodiments, the support may alternatively be positioned within the second portion 302. Further, in some other embodiments, the support 306 may have a first component that is disposed within the first portion 316 and a second component that is disposed within the second portion 302. The support 306 may be comprised of a foam-like material, as shown in the embodiment of FIG. 3, but in other embodiments (such as will be discussed herein), the support 306 may be comprised of any other suitable material and may take on any other configuration to support and secure one or more cables within the device 300.

Still referring to FIGs. 3-4, the second portion 302 of the device 300 may further include a thumb portion 304, and the first portion 316 may include a thumb cutout 308. The thumb portion 304 and the thumb cutout 308 may be designed to allow for easier opening and closing of the second portion 302 with respect to the first portion 316. For example, the thumb portion 304 may extend from a first side 302a of the second portion 302 over the first edge 310 of the first portion 316 when the second portion 302 is in the closed position such that the second portion 302 is more easily moveable from the closed position to the open position by a user. The thumb portion 304 may be located on the same side of the device 300 as is the first edge 312 of the second portion 302 that is configured to removably latch with the first edge 310 of the first portion 316. Additionally or alternatively, the first portion 316 may include a thumb cutout 308 on a first side 316a of the first portion 316 that is vertically below the thumb portion 304 of the second portion 302 when the second portion 302 is in the closed position. The thumb cutout 308 may allow a thumb to fit around the thumb portion 304 of the second portion 302 more easily by creating more space between the thumb portion 304 and the surface on which the device 300 is mounted.

The thumb portion 304 may be strategically oriented such that, when the device 300 is mounted onto, e.g., a fiber management tray, the device 300 is easily accessible with respect to other components on the fiber management tray. For example, referring back to FIG. 2, the longitudinal axis LA1 of the device 260 may extend parallel to the first side 2 of the fiber management tray 254, and the device 260 may be mounted to the fiber management tray 254 such that the first side 302a of the second portion 302 that comprises the thumb portion 304 is farther from the first side 2 of the fiber management tray 254 than is the second side 302b of the second portion 302.

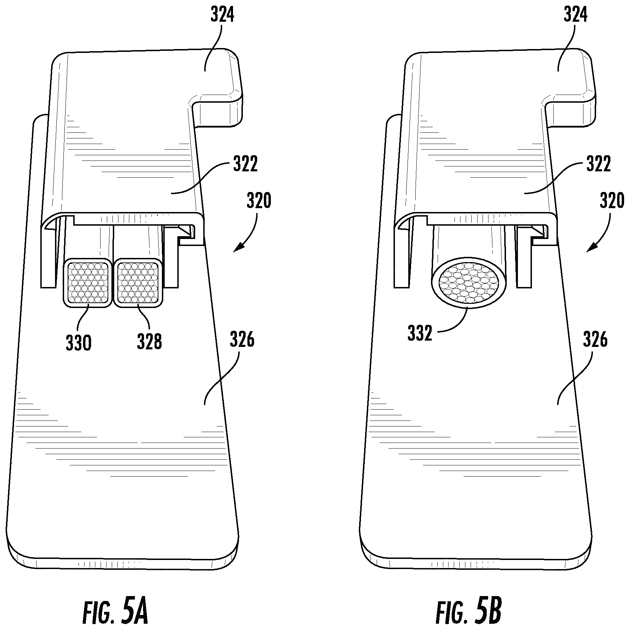

FIG. 5A illustrates another example device 320 that is similar to the device 300 illustrated in FIG 3. The device 320 includes a first portion 326 and a second portion 322, the second portion 322 having a thumb portion 324. The device 320 is shown in a closed position with a first cable 330 and a second cable 328 secured therewithin. FIG. 5B illustrates the example device 320 in the closed position with a third cable 332 secured therewithin. In this regard, the same device 320 is configured to be able to secure the first cable 330 and the second cable 328 simultaneously or the third cable 332 by itself (where the third cable 332 has a larger cross-sectional area than each of the first cable 330 and the second cable 328). That is, the device 320 can secure different quantities and sizes of cables without the device 320 having to be adjusted or altered. It is within the scope of the present disclosure that alternate combination of number of cables and cable diameters may be held by device 320.

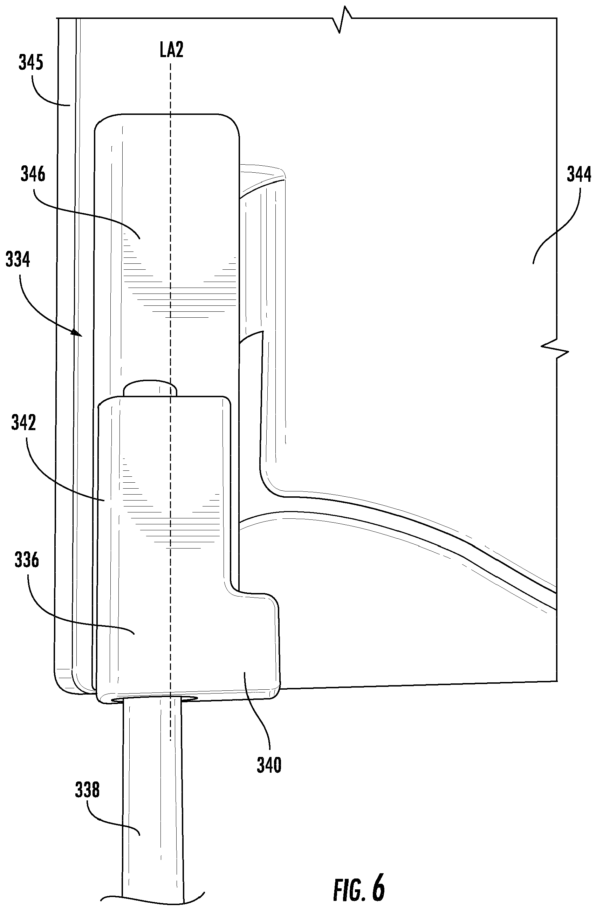

FIG. 6 illustrates another example device 334 that is similar to the device 300 illustrated in FIG 3. The device 334 is mounted to a fiber management tray 344 and contains a cable 338 secured therewithin. The device 334 includes a first portion 346 and a second portion 336, and the second portion 336 has a thumb portion 340. Notably, a longitudinal axis LA2 of the device 334 extends parallel to an edge 345 of the fiber management tray 344, and the device 334 is mounted to the fiber management tray 344 such that the thumb portion 340 is farther from the edge 345 than a remainder of the second portion 336. This allows a user to easily open and close the second portion 336 with respect to other components on the fiber management tray 344 (such as with respect to the edge 345).

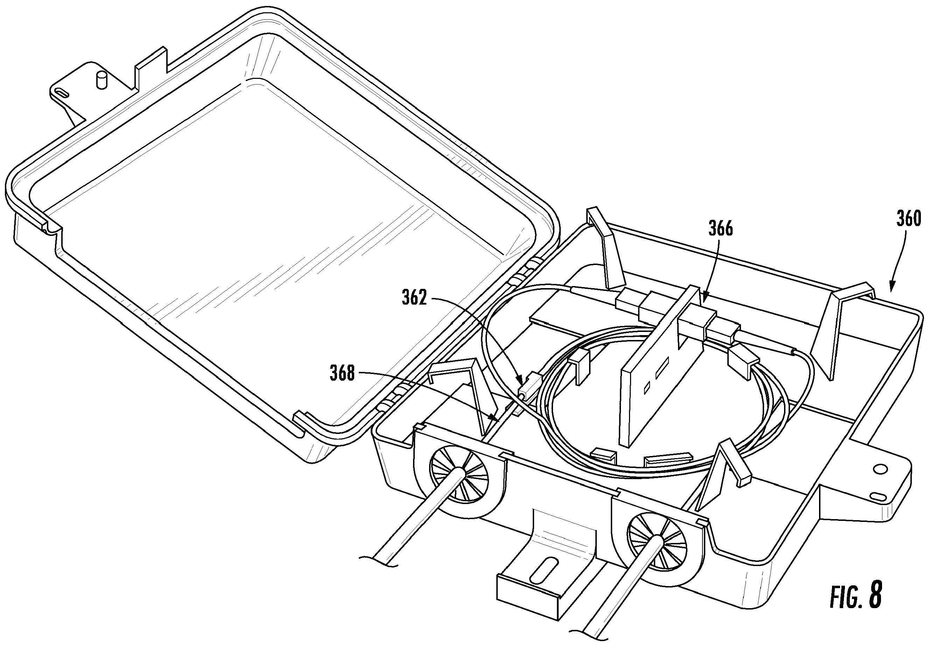

It should be appreciated that the devices disclosed herein may be mounted to structures other than fiber management trays. For example, FIG. 7 illustrates a device 350 mounted within a splice tray 356 (for simplicity of illustration, various additional cables and components of the splice tray 356 are removed). The device 350 contains a cable 352 secured therewithin, and the cable extends within the splice tray 356 into splice tray components 354. Notably, the device 350 holds the cable 352 in proper position to aid in proper fiber management within the splice tray 356. As another example, FIG. 8 illustrates a device 362 mounted within another example enclosure 360 (for simplicity of illustration, various additional cables and components of the enclosure 360 are removed). The device 362 contains a cable 368 secured therewithin, and the cable 368 extends within the enclosure 360 into a fiber management portion 366. Notably, the device 362 holds the cable 368 in proper position to aid in proper fiber management within the enclosure 360. Further, in some other embodiments, various devices disclosed herein may be mounted to any other structure to secure one or more cables.

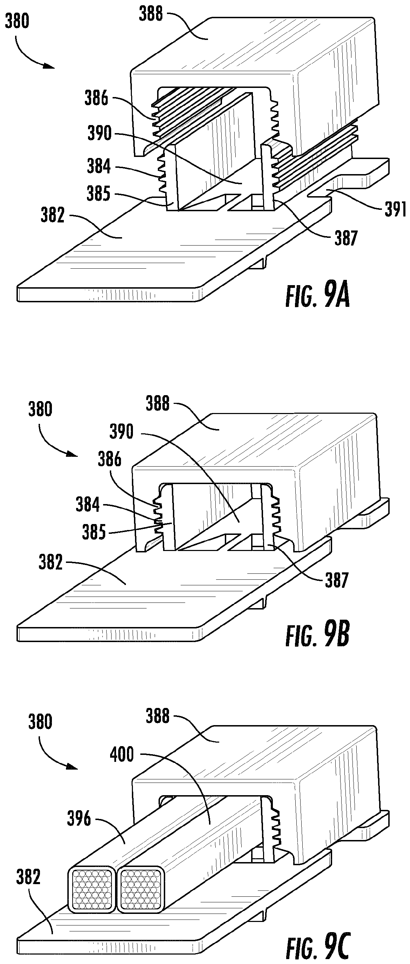

FIGs. 9A-9C illustrate a device 380 for securing one or more cables. The device 380 includes a first portion 382 and a second portion 388. The first portion 382 of the device 380 contains a first wall 385 and a second wall 387, and the first wall 385 contains a first plurality of ridges 384 extending at different heights. The first plurality of ridges 384 are configured to interact with a second plurality of ridges 386 disposed within the second portion 388. The second plurality of ridges 386 of the second portion 388 are configured to removably latch with the first plurality of ridges 384 of the first portion 382 in one of multiple positions so as to enable different sized channels for securing the one or more cables therein. For example, the second portion 388 may be pushed down onto the first portion 382 such that the second plurality of ridges 386 expand and contract along the first plurality of ridges 384 until a desired channel size is achieved for the one or more cables being secured. When the desired channel size is achieved, the second portion 388 may be locked in place with respect to the first portion 382 such that peaks of the second plurality of ridges 386 rest within valleys of the first plurality of ridges 384 (and vice versa). To remove the one or more cables, the second portion 388 may be pulled apart and moved upward such that the second plurality of ridges 386 are disengaged from the first plurality of ridges 384 and the second portion 388 is separated from the first portion 382. Alternatively, the second portion 388 may be slid along a longitudinal axis (e.g., that is parallel to the one or more cables) to disengage the second portion 388 from the first portion 382 and remove the one or more cables. FIG. 9A shows the device 380 with the second portion 388 in an open position, and FIG. 9B shows the device 380 with the second portion 388 in a closed position. FIG. 9C illustrates the device 380 with the second portion 388 in a closed position and containing cable 396 and cable 400 secured therewithin. In some embodiments, the first portion 382 of the device 380 further comprises at least one thumb cutout 391 that is configured such that a thumb can more easily fit around the second portion 388 to move the second portion 388 back and forth between a closed position and an open position.

The first portion 382 also contains an area 390 configured to optionally receive a support such as a support cushion, a spring mechanism, or any other support configured to secure one or more cables within the device 380. In some embodiments, a support disposed within the area 390 may be configured to rest against the one or more cables when the second portion 388 is moved into the closed position such that the support helps enable differently sized cables to be secured between the first portion 382 and the second portion 388 when the second portion 388 is in the closed position. It should be appreciated that, in some embodiments, the device 380 is capable of enabling different sized channels for securing different quantities and/or sizes of cables therein without a support in area 390 at all, as shown in FIG. 9C.

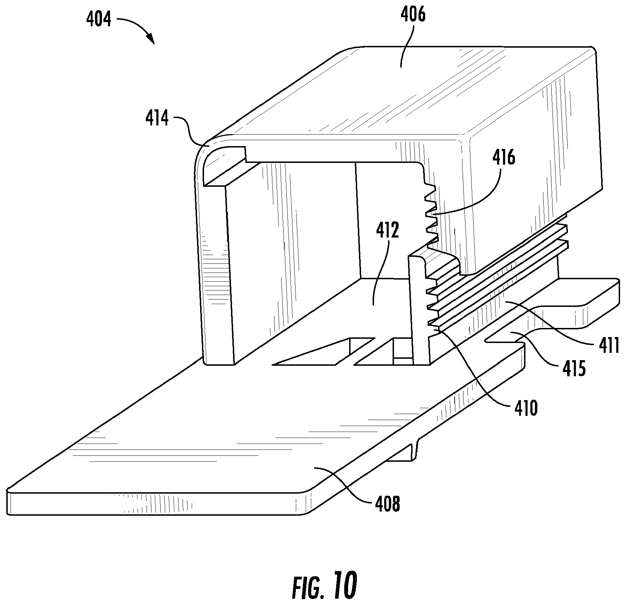

FIG. 10 illustrates another example device 404 for securing one or more cables. The device 404 includes a first portion 408 and a second portion 406. The first portion 408 and the second portion 406 are connected by a living hinge 414. Further, the first portion 408 of the device 404 contains a wall 411 comprising a first plurality of ridges 410 extending at different heights. The first plurality of ridges 410 are configured to interact with a second plurality of ridges 416 disposed within the second portion 406. The second plurality of ridges 416 of the second portion 406 are configured to removably latch with the first plurality of ridges 410 of the first portion 408 in one of multiple positions so as to enable different sized channels for securing the one or more cables therein. For example, the second portion 406 may be pushed down onto the first portion 408 such that the second plurality of ridges 416 expand and contract along the first plurality of ridges 410 until a desired channel size is achieved for the one or more cables being secured. When the desired channel size is achieved, the second portion 406 may be locked in place with respect to the first portion 408 such that peaks of the second plurality of ridges 416 rest within valleys of the first plurality of ridges 410 (and vice versa). To remove the one or more cables, the second portion 406 may be pulled apart and moved upward such that the second plurality of ridges 416 are disengaged from the first plurality of ridges 410 and the second portion 406 is separated from the first portion 408.

In some embodiments, the first portion 408 of the device 404 further contains a thumb cutout 415 such that a thumb can more easily fit around the second portion 406 to move the second portion 406 back and forth between a closed position and an open position.

The first portion 408 also comprises an area 412 configured to optionally receive a support such as a support cushion, a spring mechanism, or any other support configured to secure one or more cables within the device 404. In some embodiments, a support disposed within the area 412 may be configured to rest against one or more cables when the second portion 406 is moved into the closed position such that the support helps enable differently sized cables to be secured between the first portion 408 and the second portion 406 when the second portion 406 is in the closed position. It should be appreciated that, in some embodiments, the device 404 is capable of enabling different sized channels for securing different quantities and/or sizes of cables therein without a support in area 412 at all.

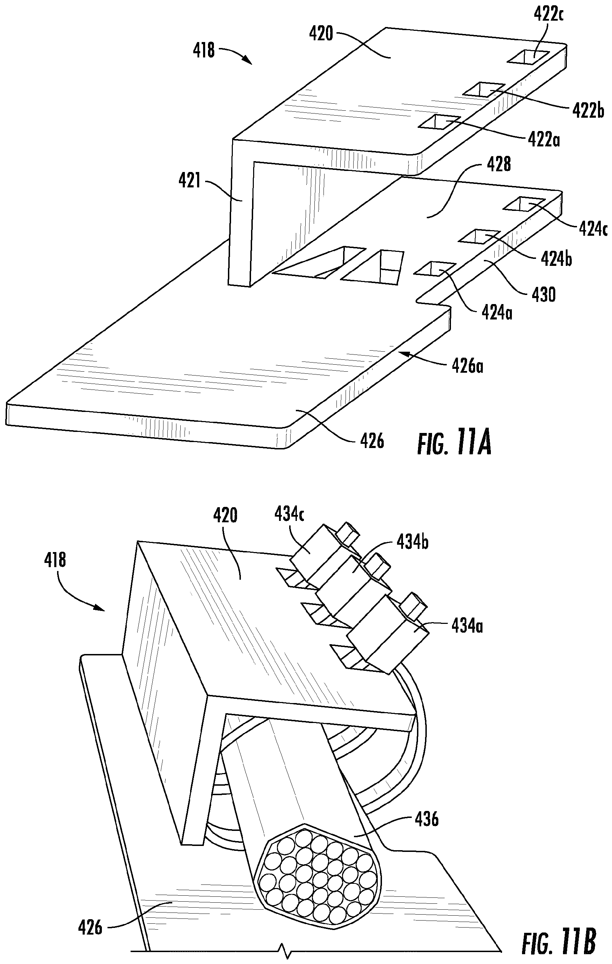

FIGs. 11A-11B illustrate another example device 418 for securing one or more cables. The device 418 includes a first portion 426 that may, in some embodiments, be rigidly connected by a side wall 421 to a second portion 420. The second portion 420 may be configured to removably attach with the first portion 426 using one or more tie wraps (e.g., first tie wrap 434a, second tie wrap 434b, and third tie wrap 434c). For example, FIG. 11B illustrates the device 418 with a cable 436 secured therewithin by the first tie wrap 434a, the second tie wrap 434b, and the third tie wrap 434c. The first tie wrap 434a is threaded through a first hole 424a in the first portion 426 and a first hole 422a in the second portion 420. The second tie wrap 434b is threaded through a second hole 424b in the first portion 426 and a second hole 422b in the second portion 420. The third tie wrap 434c is threaded through a third hole 424c in the first portion 426 and a third hole 422c in the second portion 420. In some embodiments, the first portion 426 of the device 418 further comprises a cutout 430 on a first side 426a of the first portion 426 that includes the first hole 424a, the second hole 424b, and the third hole 424c such that maintenance personnel or other user can more easily access the one or more tie wraps (e.g., the first tie wrap 434a, the second tie wrap 434b, and the third tie wrap 434c).

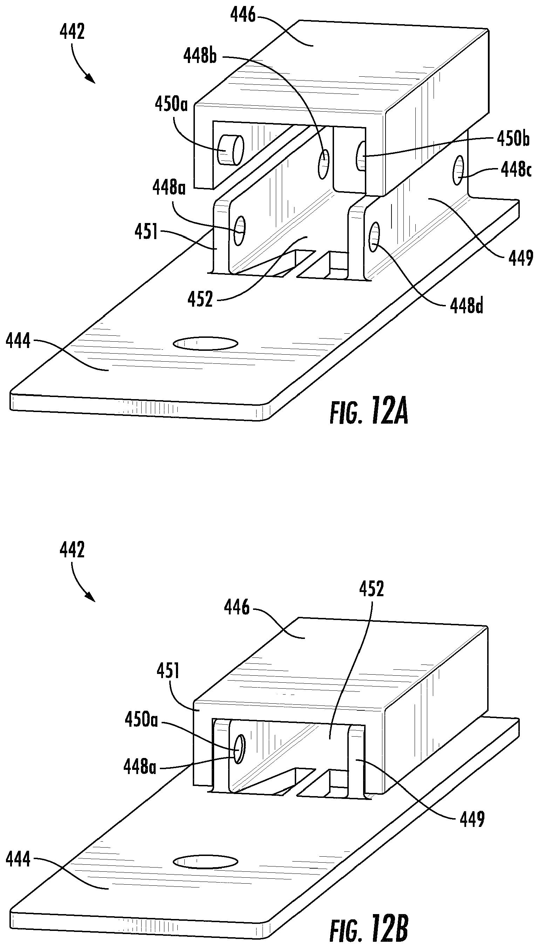

FIGs. 12A-12B illustrate another example device 442 for securing one or more cables. The device 442 includes a first portion 444 and a second portion 446. The first portion 444 of the device 404 comprises a first wall 451 and a second wall 449, and the first wall 451 and the second wall 449 contain a plurality of holes. That is, the first wall 451 contains a first hole 448a and a second hole 448b, and the second wall 449 contains a third hole 448c and a fourth hole 448d. The second portion 446 of the device 442 comprises a first peg 450a and a second peg 450b, which are disposable within the first hole 448a and the fourth hole 448d of the first portion 444, and not shown are third and fourth pegs that are disposable within the second hole 448b and the third hole 448c of the first portion 444. As shown in FIG. 12B, pegs extending from the second portion (e.g., the first peg 450a and the second peg 450b) are configured to removably latch with the first hole 448a, the second hole 448b, the third hole 448c, and the fourth hole 448d disposed in the first portion 444. For example, the second portion 446 may be configured to expand so that the pegs slide along outer surfaces of the first wall 451 and the second wall 449 until the pegs align with the holes. When the pegs align with the holes, the pegs may fall into the holes and the second portion 446 may return to its normal shape. To remove one or more cables from the device 442, the second portion 446 may be pulled apart such that the pegs are removed from the holes, and then the second portion 446 may be pulled away from the first portion 444 so that the one or more cables can be removed.

The first portion 444 also comprises an area 452 configured to receive a support such as a support cushion, a spring mechanism, or any other support configured to secure one or more cables within the device 442. In some embodiments, a support disposed within the area 452 may be configured to rest against one or more cables when the second portion 446 is moved into the closed position such that the support enables differently sized cables to be secured between the first portion 444 and the second portion 446 when the second portion 446 is in the closed position.

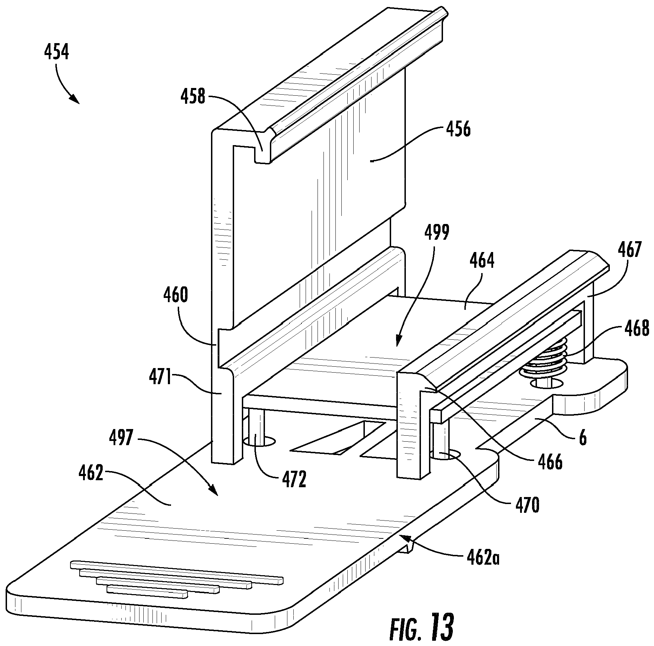

FIG. 13 illustrates another example device 454 that is similar to the device 300 shown in FIGs. 3-4, but the device 454 has a different support mechanism. The device 454 has a first portion 462 and a second portion 456, which are connected together by a living hinge 460. The first portion 462 includes a first wall 471 and a second wall 467, and the second wall 467 includes a first edge 466 which is configured to removably latch with a first edge 458 of the second portion 456. For example, the first edge 458 of the second portion 456 may be configured to overcome the first edge 466 of the second wall 467 when a downward force is exerted onto the second portion 456 such that the first edge 458 of the second portion 456 rests beneath and partially inward from the first edge 466 of the second wall 467. To remove one or more cables from the device 454, the first edge 458 of the second portion 456 may be pulled apart from the first edge 466 of the second wall 467 so that the second portion 456 can be moved back to an open position and the one or more cables can be removed.

In some embodiments, the first portion 462 of the device 454 further contains a thumb cutout 6 on a first side 462a of the first portion 462 that is vertically below the first edge 458 such that a thumb can more easily fit around the second portion 456 to move the second portion 456 back and forth between a closed position and an open position.

The device 454 further includes a support 464 connected to the first portion 462 by a spring 468, a first riser 472, and a second riser 470. In some embodiments, although not shown, the support 464 may be connected to additional springs and/or risers, e.g., between the support 464 and the first portion 462. In some embodiments, such as the embodiment shown in FIG. 13, the spring 468, the first riser 472, the second riser 470, and any additional springs and/or risers that are not shown in FIG. 13 may be configured such that a first surface 497 of the first portion 462 is parallel to a second surface 499 of the support 464 such that one or more cables are cushioned evenly as they are compressed into the device 454 and such that the one or more cables are secured within the device 474 in a position that causes longitudinal axes of the one or more cables to be parallel with the surface on which the device 474 is mounted. The support 464 may be comprised of foam-like material or any other material that allows for the device 454 to support and secure one or more cables when the second portion 456 is moved to a closed position with respect to the first portion 462.

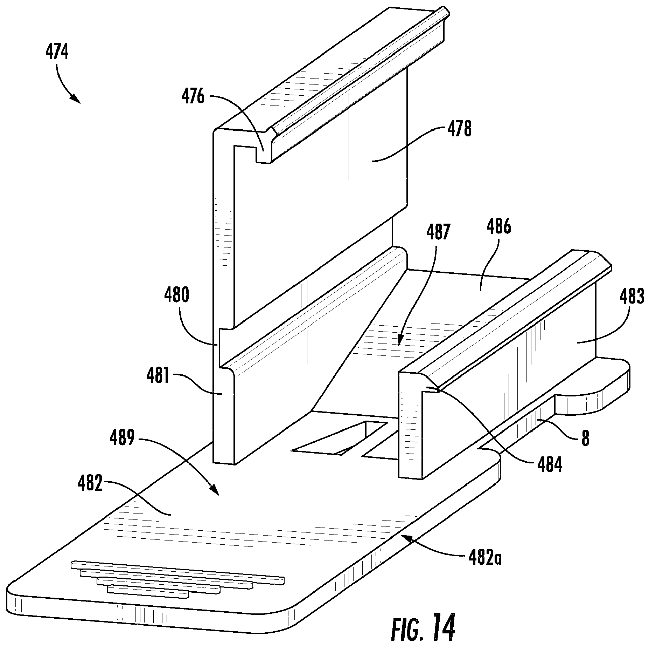

FIG. 14 illustrates another example device 474. The device 474 has a first portion 482 and a second portion 478, which are connected together by a living hinge 480. The first portion 482 includes a first wall 481 and a second wall 483, and the second wall 483 includes a first edge 484 which is configured to removably latch with a first edge 476 of the second portion 478. For example, the first edge 476 of the second portion 478 may be configured to overcome the first edge 484 of the second wall 483 when a downward force is exerted onto the second portion 478 such that the first edge 476 of the second portion 478 rests beneath and partially inward from the first edge 484 of the second wall 483. To remove one or more cables from the device 474, the first edge 476 of the second portion 478 may be pulled apart from the first edge 484 of the second wall 483 so that the second portion 478 can be moved back to an open position and the one or more cables can be removed.

In some embodiments, the first portion 482 of the device 474 further contains a thumb cutout 8 on a first side 482a of the first portion 482 that is vertically below the first edge 484 such that a thumb can more easily fit around the second portion 478 to move the second portion 478 back and forth between a closed position and an open position.

The device 474 further includes a support 486 connected to the first portion 482 by one or more spring(s) and/or riser(s). In some embodiments, such as the embodiment shown in FIG. 14, the one or more spring(s) and/or riser(s) may be configured such that a second surface 489 of the support 486 is slanted with respect to a first surface 487 of the first portion 482. The support 486 may be comprised of foam-like material or any other material that allows for the device 474 to support and secure one or more cables when the second portion 478 is moved to a closed position with respect to the first portion 482.

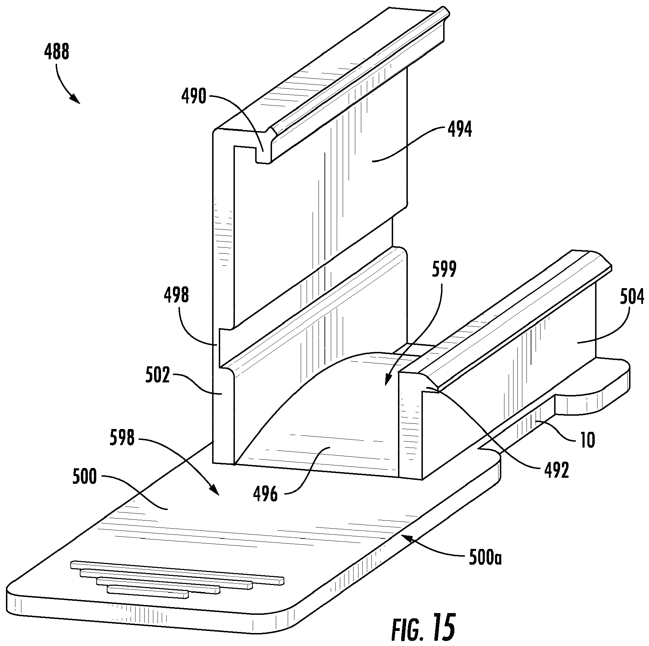

FIG. 15 illustrates another example device 488. The device 488 has a first portion 500 and a second portion 494, which are connected together by a living hinge 498. The first portion 500 includes a first wall 502 and a second wall 504, and the second wall 504 includes a first edge 492 which is configured to removably latch with a first edge 490 of the second portion 494. For example, the first edge 490 of the second portion 494 may be configured to overcome the first edge 492 of the second wall 504 when a downward force is exerted onto the second portion 494 such that the first edge 490 of the second portion 494 rests beneath and partially inward from the first edge 492 of the second wall 504. To remove one or more cables from the device 488, the first edge 490 of the second portion 494 may be pulled apart from the first edge 492 of the second wall 504 so that the second portion 494 can be moved back to an open position and the one or more cables can be removed.

In some embodiments, the first portion 500 of the device 488 further contains a thumb cutout 10 on a first side 500a of the first portion 500 that is vertically below the first edge 492 such that a thumb can more easily fit around the second portion 494 to move the second portion 494 back and forth between a closed position and an open position.

The device 488 further includes a support 496 connected to the first portion 500 by one or more spring(s) and/or riser(s). In some embodiments, such as the embodiment shown in FIG. 15, the one or more spring(s) and/or riser(s) may be configured such that a second surface 599 of the support 496 is curved with respect to a first surface 598 of the first portion 500. The support 496 may be comprised of foam-like material or any other material that allows for the device 488 to support and secure one or more cables when the second portion 494 is moved to a closed position with respect to the first portion 500.

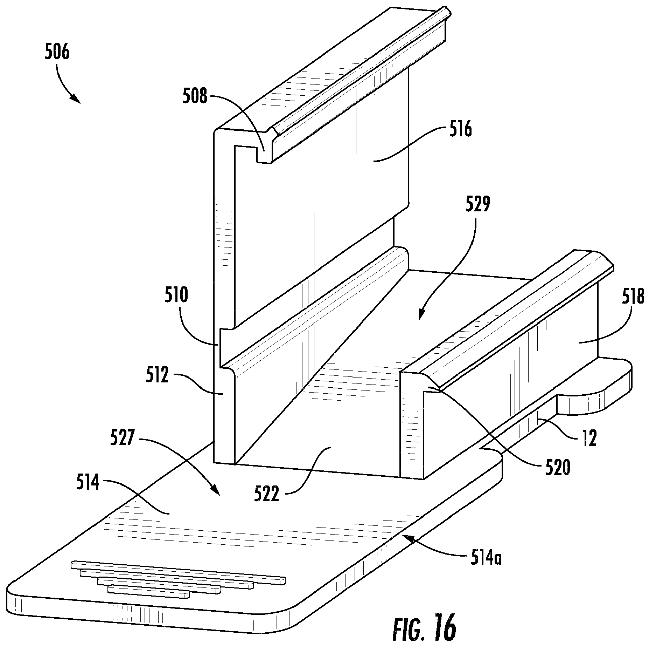

FIG. 16 illustrates another example device 506. The device 506 has a first portion 514 and a second portion 516, which are connected together by a living hinge 510. The first portion 514 includes a first wall 512 and a second wall 518, and the second wall 518 includes a first edge 520 which is configured to removably latch with a first edge 508 of the second portion 516. For example, the first edge 508 of the second portion 516 may be configured to overcome the first edge 520 of the second wall 518 when a downward force is exerted onto the second portion 516 such that the first edge 508 of the second portion 516 rests beneath and partially inward from the first edge 520 of the second wall 518. To remove one or more cables from the device 506, the first edge 508 of the second portion 516 may be pulled apart from the first edge 520 of the second wall 518 so that the second portion 516 can be moved back to an open position and the one or more cables can be removed.

In some embodiments, the first portion 514 of the device 506 further contains a thumb cutout 12 on a first side 514a of the first portion 514 that is vertically below the first edge 520 such that a thumb can more easily fit around the second portion 516 to move the second portion 516 back and forth between a closed position and an open position.

The device 506 further includes a support 522 connected to the first portion 514 by one or more spring(s) and/or riser(s). In some embodiments, such as the embodiment shown in FIG. 16, the one or more spring(s) and/or riser(s) may be configured such that a second surface 529 of the support 522 is slanted with respect to a first surface 527 of the first portion 514. Notably, the support 522 shown in FIG. 16 is different than the support 486 shown in FIG. 14 in that the support 522 in FIG. 16 has a greater surface area and length (while having the same maximum slant height as the support 486 of FIG. 14). The support 522 may be comprised of foam-like material or any other material that allows for the device 506 to support and secure one or more cables when the second portion 516 is moved to a closed position with respect to the first portion 514.

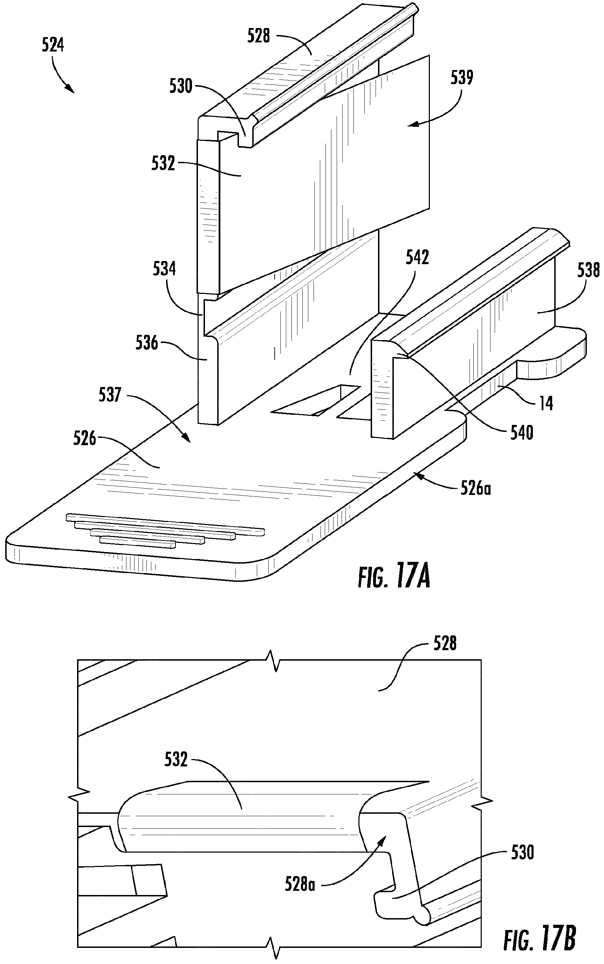

FIGs. 17A-17B illustrate another example device 524. The device 524 has a first portion 526 and a second portion 528, which are connected together by a living hinge 534. The first portion 526 includes a first wall 536 and a second wall 538, and the second wall 538 includes a first edge 540 which is configured to removably latch with a first edge 530 of the second portion 528. For example, the first edge 530 of the second portion 528 may be configured to overcome the first edge 540 of the second wall 538 when a downward force is exerted onto the second portion 528 such that the first edge 530 of the second portion 528 rests beneath and partially inward from the first edge 540 of the second wall 538. To remove one or more cables from the device 524, the first edge 530 of the second portion 528 may be pulled apart from the first edge 540 of the second wall 538 so that the second portion 528 can be moved back to an open position and the one or more cables can be removed.

In some embodiments, the first portion 526 of the device 524 further comprises a thumb cutout 14 on a first side 526a of the first portion 526 that is vertically below the first edge 540 such that a thumb can more easily fit around the second portion 528 to move the second portion 528 back and forth between a closed position and an open position.

The device 524 further includes a support 532 connected to the second portion 528 by one or more spring(s) and/or riser(s). In some embodiments, such as the embodiment shown in FIG. 17A, the one or more spring(s) and/or riser(s) may be configured such that a second surface 539 of the support 532 is slanted with respect to a first surface 537 of the second portion 528. The slant of the second surface 539 may be configured such that one or more cables are cushioned gradually as they are compressed into the device 524 and such that the one or more cables are secured within the device 524 in a position that allows longitudinal axes of the one or more cables to be slanted or angled with respect to the surface on which the device 524 is mounted. For example, the one or more cables may be more tightly secured in the portion of the device 524 under which the spring is located. In other embodiments, however, the second surface 539 may be configured in any other way. For example, the second surface 539 may alternatively be configured to be parallel with the first surface 537 such that one or more cables disposed within the device 524 are secured in a position such that longitudinal axes of the one or more cables are parallel with respect to a surface on which the device 524 is mounted. FIG. 17B is a zoomed-in front view of the support 532 of the device 524. As shown, the support 532 may be configured to wrap around a front edge portion 528a of the second portion 528. The support 532 may be comprised of foam-like material or any other material that allows for the device 524 to support and secure one or more cables when the second portion 528 is moved to a closed position with respect to the first portion 526.

The first portion 526 also comprises an area 542 configured to optionally receive a second support (not shown) such as a support cushion, a spring mechanism, or any other support configured to further secure one or more cables within the device 524. In some embodiments, a second support disposed within the area 542 may be configured to rest against one or more cables when the second portion 528 is moved into the closed position such that the second support helps, along with the support 532, enable differently sized cables to be secured between the first portion 526 and the second portion 528 when the second portion 528 is in the closed position. It should be appreciated that, in some embodiments, the device 524 is capable of enabling different sized channels for securing different quantities and/or sizes of cables therein without a second support in area 542 at all.

It should be appreciated that the devices disclosed herein may have any other connection mechanisms than those discussed and illustrated herein, and further, that the devices disclosed herein may have any other support mechanisms than those discussed and illustrated herein. For example, a device may have a support with a non-smooth surface, a device may have more than one support on one or both of a first portion and a second portion of the device, and/or a first portion and a second portion of a device may be connected by a nut and screw mechanism. Other support configurations and connection mechanisms are also contemplated.

### Example Flowchart(s)

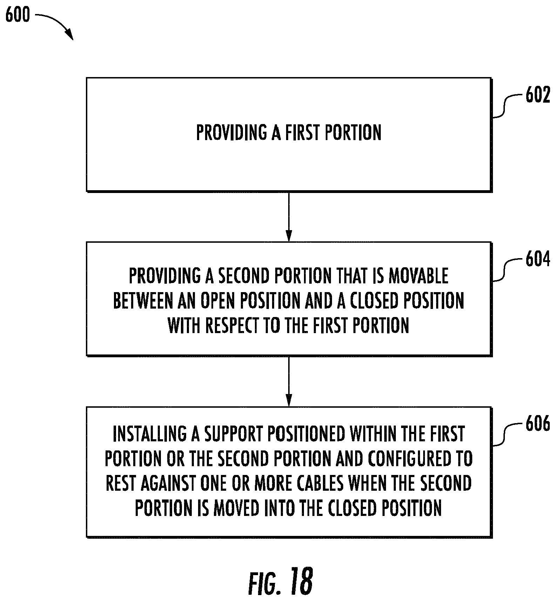

Embodiments of the present disclosure provide various methods for manufacturing a device for securing one or more cables, such as described herein. Various examples of the operations performed in accordance with some embodiments of the present disclosure will now be provided with reference to FIG. 18. Unless otherwise expressly stated, it is not intended that any method set forth herein be construed as requiring that its steps be performed in a specific order.

FIG. 18 illustrates a flowchart according to an example method 600 of manufacturing a device for securing one or more cables according to an example embodiment. The method 600 may include providing a first portion at operation 602. For example, the first portion may be any of the first portions disclosed herein. At operation 604, the method may include providing a second portion that is movable between an open position and a closed position with respect to the first portion, as described herein. For example, one side of the second portion may be connected to one side of the first portion by a living hinge, and the other side of the second portion may be configured to removably latch to the other side of the first portion, as described herein. At operation 606, the method may include installing a support positioned within the first portion or the second portion and configured to rest against one or more cables when the second portion is moved into the closed position. For example, the support may include at least one spring, and/or the support may include a foam-like material. Additional manufacturing operations and/or additional usage operations are also contemplated.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A device for securing one or more cables, the device comprising:
a first portion configured to receive one or more cables therein;
a second portion that is movable between an open position and a closed position with respect to the first portion; and
a support positioned within the first portion or the second portion and configured to rest against the one or more cables when the second portion is moved into the closed position, wherein the support enables differently sized cables to be secured between the first portion and the second portion when the second portion is in the closed position.

2. The device of claim 1, wherein the second portion is configured to removably latch with the first portion.

3. The device of claim 1 or claim 2, wherein a second edge of the second portion is configured to removably latch with a first edge of the first portion as a result of a force exerted by a user while the second portion is moved into the closed position.

4. The device of claim 1 or claim 2, wherein one or more second ridges of the second portion is configured to removably latch with a first plurality of ridges of the first portion in one of multiple positions so as to enable different sized channels for securing the one or more cables therein.

5. The device of claim 1 or claim 2, wherein one or more pegs extending from the second portion are configured to removably latch with one or more holes disposed in the first portion.

6. The device of claim 1 or claim 2, wherein the second portion is configured to removably latch with the first portion using one or more tie wraps, and wherein the first portion and the second portion are rigidly connected by a side wall.

7. The device of any of claims 2-6, wherein the second portion is configured to re-latch with the first portion after the second portion has moved from the closed position to the open position.

8. The device of any of claims 1-7, wherein the first portion is connected to the second portion by a hinge.

9. The device of any of claims 1-8, wherein the first portion and the second portion are separable.

10. The device of any of claims 1-9, wherein the second portion of the device comprises a thumb portion extending from a first side of the second portion such that the second portion is accessible for a user to move the second portion from the closed position to the open position.

11. The device of claim 10, wherein the first portion comprises a thumb cutout on a first side of the first portion that is vertically below the thumb portion of the second portion when the second portion is in the closed position such that a thumb can access the thumb portion of the second portion.

12. The device of any of claims 1-11, wherein the support comprises at least spring and at least one riser, and wherein the at least one spring and the at least one riser are configured such that a first surface of the first portion is parallel to a second surface of the support.

13. The device of claim 12, wherein a second surface of the support is slanted or curved with respect to a first surface of the first portion.

14. The device of any of claims 1-13, wherein the support comprises a foam-like material.

15. The device of any of claims 1-14, wherein the device further comprises an attachment clip disposed on a bottom side of the first portion such that the device is mountable to a fiber management tray.

16. An enclosure comprising:
a device according to any of claims 1-15 mounted within the enclosure; and
one or more cables disposed within the device such that the one or more cables are secured in a desired position within the enclosure when the second portion of the device is in the closed position.
